# FASCICULE DE BREVET EUROPEEN

(11) **EP 0 456 544 B1**
(45) Date de publication et mention de la délivrance du brevet: **06.10.1993**
(21) Numéro de dépôt: 91401093.9
(22) Date de dépôt: 25.04.1991
(51) Int. Cl.: C01B 3/32

(54) **Procédé et installation de production d'un gaz contenant de l'hydrogène à partir de méthanol**
Verfahren und Anlage zur Herstellung eines Wasserstoff enthaltenden Gases aus Methanol
Process and installation for the production of a gas containing hydrogen from methanol

(30) Priorité: 09.05.1990 FR 9005780
(43) Date de publication de la demande: 13.11.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Dupont, René, F-94130 Nogent-sur-Marne (FR)
(74) Mandataire: Le Moenner, Gabriel

(56) Documents cités:
- EP-A- 0 186 527
- EP-A- 0 247 384
- GB-A- 2 213 496
- PATENT ABSTRACTS OF JAPAN vol. 10, no. 120 (C-343)(2177), 6 mai 1986; & JP - A - 60246201 (TOUYOU ENGINEERING K.K.) 05.12.1985
- PATENT ABSTRACTS OF JAPAN vol. 13, no. 419 (C-637)(3767), 18 septembre 1989; & JP - A - 1157402 (FUJI ELECTRIC CO. LTD.) 20.06.1989

## Description

L'invention concerne la production d'un mélange gazeux contenant de l'hydrogène à partir de méthanol, du genre où un courant de mélange méthanol et eau est chauffé en échange thermique du gaz de réformage, puis vaporisé et surchauffé en échange thermique avec un fluide caloporteur, lui-même réchauffé par combustion d'un gaz combustible, typiquement un mélange de gaz résiduaires issus d'une unité de séparation gazeuse aval produisant de l'hydrogène pur à partir du mélange gazeux de production.

La mise en oeuvre d'un tel procédé de production fait classiquement intervenir d'un côté un réacteur de réformage et d'un autre côté une chaudière de combustion des résiduaires, avec un circuit de fluide caloporteur qui s'étend de l'un à l'autre avec un échangeur récepteur de chaleur dans la chaudière de combustion et d'autres échangeurs émetteurs de chaleur au niveau du réacteur de réformage. Cette façon de faire conduit à des installations relativement lourdes mais appropriées à des débits de production importants. Cependant lorsque le débit de production est relativement faible, la mise en oeuvre rappelée ci-dessus conduit à des coûts d'investissement importants qui affectent le prix de revient de l'hydrogène produit.

La présente invention concerne un procédé et une installation de production d'hydrogène à partir de méthanol, qui permet une simplification importante des moyens mis en oeuvre et qui est particulièrement appropriée à la production de débits modérés d'hydrogène, de l'ordre de 50 à 300 Nm³/h.

Selon l'invention, dans un procédé du type rappelé ci-dessus, les différents échanges thermiques sont tous effectués sur le pourtour d'une enceinte formant à la fois réacteur de réformage et chambre de combustion, échanges thermiques de chauffage, de vaporisation, de surchauffe et de réaction du mélange méthanol-eau s'effectuant au moyen d'échangeurs du type serpentins à double tubulure coaxiale, l'espace intertubulaire de chaque échangeur étant parcouru par le fluide le plus chaud.

En réalisant l'ensemble des opérations d'échange thermique, de combustion et de réaction de réformage dans une même et seule enceinte, on conçoit que l'on réduit au strict minimum l'investissement des moyens de mise en oeuvre d'une part, et que, d'autre part, les pertes thermiques au niveau du fluide caloporteur sont également réduites au strict minimum.

De préférence, le serpentin à double tubulure de réaction du mélange vaporisé méthanol-eau à fluide caloporteur externe est placé dans l'enceinte en exposition directe à la flamme de combustion du gaz combustible, alors que le serpentin à double tubulure de vaporisation et de surchauffe du mélange méthanol-eau en échange avec le fluide caloporteur externe est placé dans l'enceinte entre le serpentin de réaction du mélange méthanol-eau et le serpentin de chauffe du mélange liquide méthanol-eau en échange avec le gaz de production, le tout de façon à constituer un passage en chicane d'écoulement des fumées.

L'invention concerne également une installation de production d'un mélange gazeux contenant de l'hydrogène à partir de méthanol, comportant un réacteur de réformage alimenté en mélange liquide méthanol-eau, un moyen de chauffe du mélange liquide-méthanol-eau par échange thermique avec le mélange gazeux de production chaud, un moyen de vaporisation et de surchauffe dudit mélange chauffé par échange thermique avec un fluide caloporteur, un moyen de réaction dudit mélange vaporisé et surchauffé méthanol-eau par échange thermique également avec ledit fluide caloporteur, des moyens de séparation de l'eau du mélange de réformage par refroidissement et condensation partielle, et des moyens d'élaboration d'hydrogène pur par séparation gazeuse dégageant les résiduaires combustibles, des moyens de chauffe du fluide caloporteur par combustion, notamment desdits résiduaires combustibles, et cette installation selon l'invention est caractérisée en ce que lesdits moyens d'échange thermique et moyens de chauffe du fluide caloporteur sont tous situés à la périphérie d'une même enceinte formant à la fois chambre de combustion des résiduaires et réacteur de réformage. De préférence, les moyens de chauffe du mélange liquide méthanol-eau, les moyens de vaporisation et de surchauffe du mélange méthanol-eau et des moyens de réaction du mélange vaporisé et surchauffé méthanol-eau forment trois ensembles échangeurs cylindriques du type serpentin à double tubulure, agencés concentriquement l'un à l'autre, l'échangeur le plus intérieur délimitant la chambre de combustion proprement dite avec son brûleur.

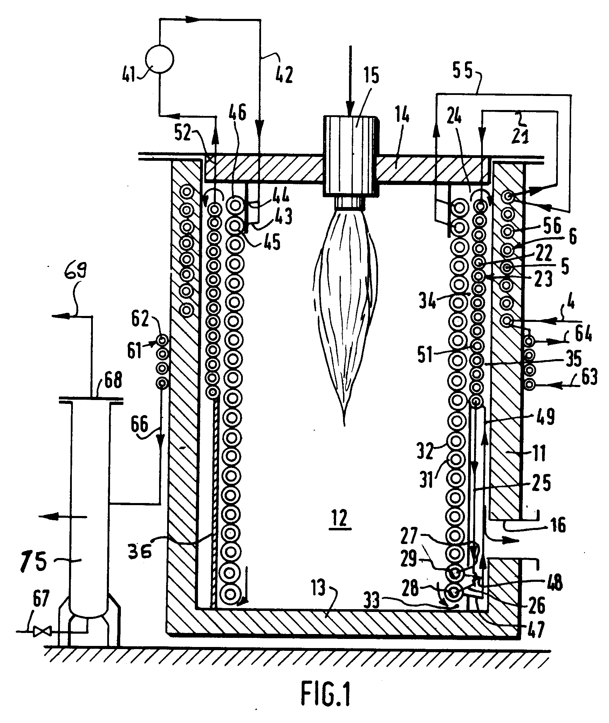

Les caractéristiques et avantages de l'invention ressortiront d'ailleurs de la description qui suit en référence aux dessins annexés dans lesquels
- la figure 1 est une vue en coupe de la chaudière de combustion formant réacteur de réformage ;

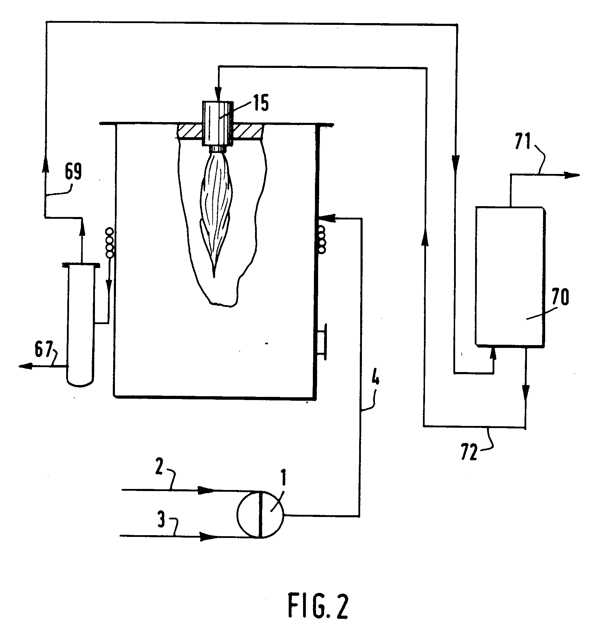

- la figure 2 est une vue plus complète de l'invention.

En se référant aux dessins annexés, un mélangeur 1 reçoit du méthanol par une conduite 2 et de l'eau par une conduite 3 et transfert le mélange méthanol-eau à l'état liquide par une conduite 4 dans un serpentin intérieur 5 d'un échangeur tubulaire à double serpentin 6. Cet échangeur en forme de serpentin 5 est placé dans la paroi latérale cylindrique d'isolation thermique 11 d'une chambre de combustion 12 avec une paroi de fond 13 et une paroi de sommet 14 recevant un brûleur 15. A la sortie du serpentin tubulaire 5, le mélange méthanol-eau encore à l'état liquide mais réchauffé est transféré par une conduite 21 dans un conduit intérieur 22 d'un autre échangeur thermique en forme de serpentin à double tubulure 23, dans lequel le mélange méthanol-eau est vaporisé et surchauffé. Cet échangeur thermique en forme de serpentin 23 est placé à faible distance de la paroi latérale 11 de la chambre de combustion 12, en ménageant par rapport à celle-ci un espace annulaire 35 et à son extrémité supérieure un passage 24 avec la paroi de sommet 14, et se poursuit vers le bas par une virole 36 aboutissant à la paroi de fond 13. On peut également prévoir que la virole 36 soit une position haute et le serpentin 23 en position basse.

Le mélange vaporisé et surchauffé méthanol-eau issu du serpentin tubulaire interne 22 est ensuite transféré par une conduite 25 se subdivisant en deux conduites 26 et 27 aux entrées de deux serpentins tubulaires de réaction de réformage 28 et 29 de deux échangeurs à double tubulure imbriqués l'un dans l'autre 31, 32, qui s'étendent pratiquement sur toute la hauteur de la chambre de combustion 12 à faible distance (espace annulaire 34) de l'échangeur thermique 23 et à faible distance (espace inférieur 33) de la paroi de fond 13, de façon à ménager ainsi un passage annulaire à chicanes 33 - 34 - 24 - 35 pour l'écoulement des fumées, qui s'échappent de la chambre de combustion 12 par un large passage 16 situé au bas de ladite chambre 12. Un circuit de fluide caloporteur comporte une pompe 41 avec une conduite de refoulement 42 se subdivisant en deux conduites 43 - 44 pénétrant dans l'espace intertubulaire 45 - 46 des échangeurs thermiques 31 - 32, d'où ils ressortent près du fond 13 de la chambre de combustion 12 en 47 - 48 pour être renvoyés par une conduite 49 dans l'espace intertubulaire 51 de l'échangeur tubulaire de vaporisation et surchauffe 23, d'où il ressort par une conduite 52 vers l'aspiration de la pompe de circulation 41.

Le gaz de production qui est un mélange d'hydrogène et d'eau s'échappe des échangeurs de réformage 28 - 29 par une conduite 55 pour être introduit dans la paroi intertubulaire 56 de l'échangeur de chauffe 5 du mélange méthanol-eau à l'état liquide, après quoi ce gaz de production est refroidi dans un échangeur tubulaire de refroidissement 61 en passant dans un tube intérieur 62, alors que l'espace intertubulaire de cet échangeur 61 est lui-même parcouru par de l'eau de refroidissement introduit par une conduite 63 et évacué par une conduite 64. Le mélange de réformage refroidi est ensuite transféré par une conduite 66 vers un pot séparateur 75 délivrant de l'eau en cuve 67 et un mélange d'hydrogène impur en tête 68, qui est transféré par une conduite 69 vers une unité de séparation 70, généralement du type à adsorption ("Pressure swing adsorption PSA"), délivrant un gaz hydrogène pur par une conduite 71 et différents résiduaires combustibles par une conduite 72, qui alimentent le brûleur 15.

On conçoit que la réalisation décrite où la chambre de combustion forme également le réacteur de réformage est particulièrement simple, car tous les circuits d'échange thermique du mélange de réformage d'une part, du fluide caloporteur d'autre part avec le mélange méthanol-eau y sont intégrés, à l'exception de la pompe de circulation du fluide caloporteur à proximité immédiate. Il en résulte clairement une réduction sensible du coût d'investissement. Comme tous les échanges s'effectuent in situ, avec le fluide le plus chaud directement exposé à la flamme de combustion et en échange thermique immédiat avec le mélange en cours de réformage, on assure un rendement thermique optimal des échanges thermiques, de sorte que le coût de focntionnement de l'installation s'en trouve également réduit.

## Revendications

1. Procédé de production d'un mélange gazeux contenant de l'hydrogène (71) à partir de méthanol (2), du genre où un courant de mélange méthanol (2) et eau (3) est chauffé (6) en échange thermique du mélange gazeux de production (56), puis vaporisé, surchauffé (22) et mis en réaction (28,29) en échange thermique avec un fluide caloporteur (42,31,32,51), lui-même réchauffé par combustion (15) de gaz combustible (72), caractérisé en ce que les différents échanges thermiques sus-mentionnés sont tous effectués sur le pourtour d'une enceinte (12) formant à la fois réacteur de réformage (28,31) (29,32) et chambre de combustion (15), les échanges thermiques de chauffage (5,56), de vaporisation et de surchauffe (22,51) et de réaction (28,31) (29,32) du mélange méthanol-eau s'effectuant au moyen d'échangeurs du type serpentins tubulaires à double tubulure coaxiale, dans laquelle l'espace intertubulaire est parcouru par le fluide le plus chaud.

2. Procédé selon la revendication 1, caractérisé en ce que le serpentin à double tubulure (28,31) (29,32) de réaction du mélange vaporisé méthanol-eau à fluide caloporteur externe (45) est placé dans l'enceinte (12) en exposition directe à la flamme de combustion (15) du gaz combustible.

3. Procédé selon la revendication 1 ou 2, caractérisé en ce que le serpentin à double tubulure de vaporisation et surchauffe (22) du mélange méthanol-eau en échange avec le fluide caloporteur externe (51) est placé dans l'enceinte entre le serpentin de réaction (28,31) (29,32) de mélange vaporisé méthanol-eau et le serpentin de chauffe (5) du mélange liquide méthanol-eau en échange avec le mélange gazeux de production (56).

4. Procédé selon l'une des revendications 1 à 3, caractérisé en ce que le mélange gazeux de production (56) est refroidi (61) et délivré à une unité de séparation (70) produisant de l'hydrogène pur (71) et un mélange gazeux résiduaire (72) constituant le gaz combustible.

5. Installation de production d'un mélange gazeux contenant de l'hydrogène à partir de méthanol, comportant un réacteur de réformage (12) alimenté en mélange liquide méthanol-eau, un moyen de chauffe du mélange liquide par échange thermique (5) avec le mélange gazeux de production (56), un moyen de vaporisation et surchauffe du mélange liquide chauffé par échange thermique (23) avec un fluide caloporteur (51), un moyen de réaction dudit mélange vaporisé méthanol-eau par échange thermique (28-29) également avec ledit fluide caloporteur (31,32), et des moyens de combustion (15) pour chauffer le fluide caloporteur (31,32), caractérisé en ce que les moyens de chauffe, de vaporisation et surchauffe et de réaction sont tous situés à la périphérie d'une même enceinte (12) formant à la fois chambre de combustion et réacteur de réformage (28,31) (29,32), les moyens de combustion (15) étant disposés centralement dans l'enceinte.

6. Installation selon la revendication 5, caractérisée en ce que les moyens de chauffe (5,56) du mélange liquide méthanol-eau, les moyens de vaporisation et surchauffe du mélange méthanol-eau (22,51) et les moyens de réaction (28,31) (29,32) du mélange vaporisé méthanol-eau sont constitués de trois ensembles échangeurs (6) (22), (28,31 et 29,32), respectivement, du type serpentin tubulaire à double tubulure, agencés concentriquement, l'échangeur le plus intérieur (28,31 et 29,32) délimitant la chambre de combustion proprement dite (12).

7. Installation selon les revendications 5 ou 6, caractérisée en ce qu'elle comprend en outre des moyens de séparation (75) de l'eau du mélange gazeux de production par refroidissement et condensation (61,63,64).

8. Installation selon l'une quelconque des revendications 5 à 7, caractérisée en ce qu'elle est couplée à une unité de séparation alimentée par le mélange gazeux de production (70) produisant de l'hydrogène pur (71) et un mélange gazeux résiduaire (72) alimentant les moyens de combustion (15).

## Patentansprüche

1. Verfahren zur Herstellung eines Wasserstoff (71) enthaltenden Gasgemisches aus Methanol (2), bei dem ein Strom eines Gemisches aus Methanol (2) und Wasser (3) durch Wärmeaustausch mit dem zu gewinnenden Gasgemisch (56) erhitzt (6), dann verdampft, überhitzt (22) und durch Wärmeaustausch mit einem Wärmeübertragungsfluid (42, 31, 32, 51), welches wiederum durch Verbrennung (15) von Brenngas (72) erneut erhitzt wird, zur Reaktion gebracht wird, dadurch gekennzeichnet, daß die verschiedenen Wärmeaustauschvorgänge im äußeren Umfang eines Behälters (12) erfolgen, der gleichzeitig einen Umsetzungsreaktor (28, 31) (29, 32) und eine Brennkammer (15) bildet, wobei der Erhitzungs- (5, 56), der Verdampfungs- und Überhitzungs- (22, 51) sowie der Reaktionswärmeaustausch (28, 31) (29, 32) des Methanol-Wasser-Gemisches mittels Rohrschlangenaustauschern mit koaxialen Doppelrohren erfolgt, bei denen das Außenrohr vom heißesten Fluid durchflossen wird.

2. Verfahren nach Anspruch 1, dadurch gekennzeichnet, daß die Doppelrohrschlange (28, 31) (29, 32) mit außenfließendem Wärmeübertragungsfluid (45) für die Reaktion des verdampften Methanol-Wasser-Gemisches der Verbrennungsflamme (15) des Brenngases im Behälter (12) direkt ausgesetzt wird.

3. Verfahren nach Anspruch 1 oder 2, dadurch gekennzeichnet, daß die Doppelrohrschlange zum Verdampfen und Überhitzen (22) des Methanol-Wasser-Gemisches durch Austausch mit dem außenfließenden Wärmeübertragungsfluid (51) im Behälter zwischen der Reaktionsschleife (28, 31) (29, 32) des verdampften Methanol-Wasser-Gemisches und der Heizschlange (5) zum Erhitzen des flüssigen Methanol-Wasser-Gemisches durch Austausch mit dem zu gewinnenden Gasgemisch (56) angeordnet wird.

4. Verfahren nach einem der Ansprüche 1 bis 3, dadurch gekennzeichnet, daß das zu gewinnende Gasgemisch (56) abgekühlt (61) und an einen Abscheider (70) geliefert wird, der reinen Wasserstoff (71) und ein das Brenngas bildende Restgasgemisch (72) liefert.

5. Anlage zur Herstellung eines Wasserstoff enthaltenden Gasgemisches aus Methanol, mit einem Umsetzungsreaktor (12), dem flüssiges Methanol-Wasser-Gemisch zugeführt wird, mit einer Einrichtung zum Erhitzen des flüssigen Gasgemisches durch Wärmeaustausch (5) mit dem zu gewinnenden Gasgemisch (56), mit einer Einrichtung zum Verdampfen und Überhitzen des durch Wärmeaustausch (23) mit einem Wärmeübertragungsfluid (51) erhitzten flüssigen Gasgemisches, mit einer Einrichtung zur Reaktion des verdampften Methanol-Wasser-Gemisches durch Wärmeaustausch (28, 29) mit ebenfalls dem Wärmeübertragungsfluid (31, 32) und mit einer Verbrennungseinrichtung (15) zum Erhitzen des Wärmeübertragungsfluids (31, 32), dadurch gekennzeichnet, daß die Einrichtungen zum Erhitzen, zum Verdampfen und Überhitzen sowie für die Reaktion am Umfang eines einzigen Behälters (12) angeordnet sind, der gleichzeitig Brennkammer und Umsetzungsreaktor (28, 31) (29, 32) ist, wobei die Verbrennungseinrichtung (15) mittig im Behälter angeordnet ist.

6. Anlage nach Anspruch 5, dadurch gekennzeichnet, daß die Einrichtung zum Erhitzen (5, 56) des flüssigen Methanol-Wasser-Gemisches, die Einrichtung zum Verdampfen und Überhitzen des Methanol-Wasser-Gemisches (22, 51) und die Einrichtung für die Reaktion (28, 31) (29, 32) des verdampften Methanol-Wasser-Gemisches aus drei Austauscheranordnungen (6) (22) bzw. (28, 31 und 29, 32) mit konzentrisch angeordneter Doppelrohrschlange bestehen, wobei der innerste Austauscher (28, 31 und 29, 32) die eigentliche Brennkammer (12) begrenzt.

7. Anlage nach Anspruch 5 oder 6, dadurch gekennzeichnet, daß sie des weiteren eine Einrichtung (75) zum Abscheiden des Wassers von dem zu gewinnenden Gasgemisch durch Abkühlung und Kondensation (61, 63, 64) aufweist.

8. Anlage nach einem der Ansprüche 5 bis 7, dadurch gekennzeichnet, daß sie mit einem Abscheider (70) verbunden ist, dem das zu gewinnende Gasgemisch zugeführt wird und der reinen Wasserstoff (71) und ein die Verbrennungseinrichtung (15) versorgendes Restgasgemisch (72) liefert.

## Claims

1. Process for the production, from methanol (2), of a gaseous mixture containing hydrogen (71), of the type in which a flow of a mixture of methanol (2) and water (3) is heated (6) by thermal exchange of the gaseous production mixture (56), then vaporised, superheated (22) and reacted (28, 29) by thermal exchange with a heat-exchanging fluid (42, 31, 32, 51) itself heated by the combustion (15) of combustible gas (72), characterised in that the various thermal exchanges mentioned above are carried out at the periphery of an enclosure (12) forming both a reforming reactor (28, 31) (29, 32) and a combustion chamber (15), the thermal exchanges for heating (5, 56), vaporization and superheating (22, 51) and reaction (28, 31) (29, 32) of the methanol-water mixture taking place by means of exchangers of the tubular coil type with double coaxial piping, in which the intertubular space has the hottest fluid passing through it.

2. Process according to claim 1, characterised in that the coil with double piping (28, 31) (29, 32) for reaction of the vaporized methanol-water mixture with external heat-exchanging fluid (45) is located in the enclosure (12) with direct exposure to the combustion flame (15) of the combustible gas.

3. Process according to claim 1 or 2, characterised in that the coil (22) with double piping for vaporization and superheating of the methanol-water mixture by exchange with the external heat-exchanger fluid (51) is located in the enclosure between the reaction coil (28, 31) (29, 32) for the vaporized methanol-water mixture and the coil (5) for heating the liquid methanol-water mixture by exchange with the gaseous production mixture (56).

4. Process according to one of claims 1 to 3, characterised in that the gaseous production mixture (56) is cooled (61) and conveyed to a separation unit (70) producing pure hydrogen (71) and a residual gaseous mixture (72) constituting the combustible gas.

5. Installation for the production, from methanol, of a gaseous mixture containing hydrogen, comprising a reforming reactor (12) supplied with liquid methanol-water mixture, a heating means for the liquid mixture by thermal exchange (5) with the gaseous production mixture (56), a means for the vaporization and superheating of the liquid mixture heated by thermal exchange (23) with a heat-exchanging fluid (51), a means for the reaction of the said vaporized methanol-water mixture by thermal exchange (28, 29), also with the said heat-exchanging fluid (31, 32), and combustion means (15) for heating the heat-exchanging fluid (31, 32), characterised in that the means for heating, vaporization and superheating and for reaction are all located at the periphery of the same enclosure (12) forming both a combustion chamber and a reforming reactor (28, 31) (29, 32), the combustion means (15) being arranged centrally within the enclosure.

6. Installation according to claim 5, characterised in that the heating means (5, 56) for the liquid methanol-water mixture, the means for vaporization and superheating of the methanol-water mixture (22, 51) and the reaction means (28, 31) (29, 32) for the vaporized methanol-water mixture are constituted by three exchanger assemblies (6) (22), (28, 31 and 29, 32), respectively, of the tubular coil type having concentrically-arranged double piping, the innermost exchanger (28, 31 and 29, 32) delimiting the actual combustion chamber (12).

7. Installation according to claim 5 or 6, characterised in that it further comprises means (75) for separating the water from the gaseous production mixture by cooling and condensation (61, 63, 64).

8. Installation according to an one of claims 5 to 7, characterised in that it is coupled to a separation unit supplied by the gaseous production mixture (70) producing pure hydrogen (71) and a residual gaseous mixture (72) supplying the combustion means (15).
